# EUROPEAN PATENT SPECIFICATION

(11) **EP 2 615 904 B1**
(45) Date of publication and mention of the grant of the patent: **12.07.2017**
(21) Application number: 10857341.1
(22) Date of filing: 13.09.2010
(51) Int. Cl.: A01D 34/90, A01G 3/08

(54) **HANDLE ARRANGEMENT FOR A POWER TOOL**
GRIFFANORNDUNG FÜR EIN ELEKTROWERKZEUG
DISPOSITIF DE POIGNÉE POUR OUTIL ÉLECTRIQUE

(43) Date of publication of application: 24.07.2013
(73) Proprietor: Husqvarna AB, 561 82 Huskvarna (SE)
(72) Inventor: HALLENDORFF, Johan, 553 36 Jönköping (SE)
(86) International application number: PCT/SE2010/050976
(87) International publication number: WO 2012/036597

(56) References cited:
- EP-A1- 1 106 044
- DE-B- 1 041 723
- FR-A1- 2 663 582
- JP-A- 2005 058 080
- US-A- 4 226 021
- US-A- 4 825 548
- US-B1- 6 314 649

## Description

### TECHNICAL FIELD

The present invention relates to power driven hand tools. More particularly, the present invention relates to an improved handle arrangement for the power driven hand tool and the power driven hand tool utilizing the handle arrangement.

### BACKGROUND

Various power driven hand tools (herein after referred to as "power tool"), such as (but not limited to) bandsaws, chainsaws, pole saws, trimmers, and the like, are employed in a variety of industrial, agricultural, gardening and household applications. Power tools conventionally include a main housing, a shaft (hereinafter referred to as guide tube) and a working member. The main housing usually includes a drive unit, such as an electric motor or internal combustion engine. The power tool also includes a drive shaft, enclosed in the guide tube, which extends from the drive unit to transmit power to the working member. In the case of an electrically powered tool, the motor may alternatively be positioned close to the working member while a battery may be positioned in the main housing. In that case no drive shaft is present in the guide tube.

The power tool further includes a rear handle positioned either on the main housing or on the guide tube. The rear handle may include a throttle member and is adapted to be operated by a user for regulating an operational speed of the power tool. A front handle is also provided on the guide tube for facilitating handling of the power tool. Generally, the working member, the guide tube and the main housing are coupled with each other such that there is no relative rotational movement with respect to one another.

During operation of the power tool the user may desire to operate the tool in a position, which is different from a central position, for performing various operations. For example, in the case of a pole saw, the user may desire to rotate the working member, from the central position, where the cutting is performed in a generally horizontal manner, to a position suitable for cutting off branches. Such rotation of the working member also leads to the rotation of the guide tube and the main housing from the central position thereof. Since the rear handle is positioned either on the main housing or on the guide tube, the rear handle also rotates to the position other than the central position. As a result, the user's wrist is bent in an unergonomic way or the handle is rotated in the user's hand such that it is no longer comfortable in the hand.

Various attempts have also been made in the related art, for example, U.S. Patent application No. 20080092398 published on April 24, 2008 and assigned to HEOW, Inc, titled "Combination blower, trimmer and edger for tending vegetation" that discloses a combination blower, trimmer apparatus. The apparatus includes a drive shaft housing connected to a means for rotating a drive shaft seated inside the drive shaft housing. A distal end of the drive shaft is connected to a working head. The apparatus further includes a handle and a throttle handle connected to the drive shaft housing. The drive shaft housing may be rotated by the handle; however both the engine and the throttle handle remain in the same position. A complex mechanism is employed for keeping both the engine and the throttle handle in a fixed position as the drive shaft housing is rotated. Thus, the disclosed apparatus becomes more cumbersome in operation and is constantly subjected to a high amount of wear and tear. Also, the disclosed design does not allow for free rotation of the drive shaft housing, i.e. the guide tube, during operation of the tool.

In the European patent application 1106044 a portable, powered, hand held tool is disclosed, featuring a rod, equipped with a main handle, rotatably arranged about the rod, and a secondary fixed handle. This tool is designed to be hand held for use in farming and gardening works.

In light of the foregoing, there is a need for enabling users to carry out various cutting operations while remaining free from any physical discomfort.

### SUMMARY

In view of the above, it is an objective of the present invention to solve or at least reduce the problems discussed above. In particular, the objective is to provide an improved handle arrangement for a power driven hand tool and the power driven hand tool utilizing the improved handle arrangement.

The objective is achieved by the invention as defined by claim 1. In accordance with the present invention, there is provided a handle arrangement to be utilized in a power driven hand tool having a main housing arranged at a first end of a guide tube. The hand tool also includes a working member arranged at a second end of the guide tube. The guide tube may enclose a drive shaft and consequently function as a drive shaft housing. The drive shaft is configured to transmit power from the drive unit to a working member of the power driven hand tool. Also, in some electric power driven hand tools, the electric motor may be placed in close vicinity to the working member and therefore no drive shaft is present in the guide tube. The handle arrangement to be utilized in the power driven hand tool includes a grip member for user control of the power driven hand tool. The handle arrangement is rotatably arranged to the guide tube for rotation in relation to the main housing and to the guide tube. The rotatable arrangement of the handle arrangement on the guide tube helps in keeping the handle arrangement in a comfortable orientation for a user. An advantage of such a handle arrangement is that the handle is not rotated as the rotational position of the tool is changed, and thus remains comfortable in any position of the working member of the power driven hand tool. The handle arrangement also comprises means for suspension of the power driven hand tool.

According to claim 2, the handle arrangement is freely rotatable in relation to the main housing and to the guide tube to a predefined angle both clockwise and counter-clockwise from a central position. According to claim 3, the predefined angle is approximately 90 degrees in both clockwise and counter-clockwise direction. In some situations, the user may desire to rotate the working member by 90 degrees for performing certain operations such as (but not limited to) branching. This handle arrangement is configured to have a relative rotational motion with respect to the guide tube and the main housing. Therefore, the handle arrangement remains in the same position when the power tool is rotated, and thus allows the user's hand to be in a comfortable position.

According to claim 4, the grip member is provided with a throttle control for user operation. In this case, the handle arrangement may be used both as a throttle control to regulate the speed of the power driven hand tool and as a rear handle for maneuvering the power driven hand tool.

According to claim 5, the grip member is located at a distance from the circumference of the guide tube. Further, according to claim 6, the grip member is arranged in such a way that it may be positioned at an angle in relation to the guide tube. The placement of the grip member at a distance from the guide tube and the positioning of the grip member at an angle in relation to the guide tube give the grip member an ergonomic position, and thus make it convenient for the user to hold the grip member.

According to claim 7, the handle arrangement comprises a supporting member. The supporting member comprises an aperture for securing the grip member. The aperture provides a housing for the grip member and securely places it in the supporting member. Further, since the grip member is fixedly secured to the supporting member and only the supporting member has a relative rotation in relation to the guide tube and the main housing, the grip member always remains in the same position.

Specifically, according to claim 8, the means for suspension of the power driven hand tool comprise at least one hook. The hooks may receive a strap of the harness for suspending the power driven hand tool to the body of the user. The suspension of the power tool on the body of the user substantially reduces the strain on the hands and arms of the user. Further, since the strap is attached to the hook carried by the supporting member, the harness will remain stationary even if the guide tube and the main housing rotates between different rotational positions.

According to claim 9, the handle arrangement comprises a generally tubular member **116** arranged to encircle a portion of the guide tube.

According to claim 10, the handle arrangement is supported on a protection member fixedly supported on the guide tube. During utilization of the power driven hand tool, the power driven hand tool is positioned in a manner such that the guide tube remains proximate to the body of the user. However, the protection member prevents that the guide tube contacts the user, and thus prevents excessive wear on the body or clothes of the user. The handle arrangement is supported on the protection member in such a way that the handle arrangement is freely rotatable in relation to the main housing and to the guide tube. An advantage of such a handle arrangement is that the user's hand remains comfortable between any position of the working member of the power driven hand tool.

According to claim 11, a power driven hand tool comprises a handle arrangement according to any of the preceding claims.

### BRIEF DESCRIPTION OF THE DRAWINGS

The invention will in the following be described in more detail with reference to the enclosed drawings, wherein:
FIG. 1 illustrates a perspective view of a power driven hand tool, according to an embodiment of the invention;
FIG. 2 illustrates a partial perspective view of a handle arrangement of the power driven hand tool, according to an embodiment of the invention;
FIG. 3 illustrates a partial exploded view of the handle arrangement of the power driven hand tool, according to another embodiment of the invention; and
FIG. 4 illustrates yet another partial exploded view of the handle arrangement, according to an embodiment of the invention.

### DESCRIPTION OF EMBODIMENTS

The present invention will be described more fully hereinafter with reference to the accompanying drawings, in which exemplary embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of devices. In the drawings, like numbers refer to like elements.

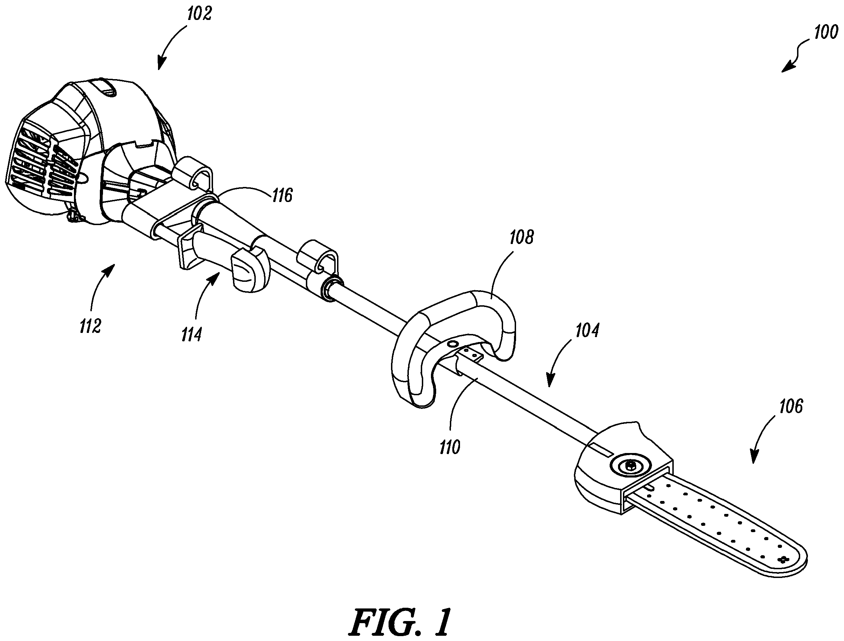

FIG. 1 illustrates a power driven hand tool **100** (hereinafter referred to as "power tool **100**"), according to an embodiment of the present invention. In the exemplary embodiment illustrated in FIG. 1, the power tool **100** is a pole saw. However, it is apparent to a person ordinarily skilled in the art that the present invention may also be used in other equipments such as (but not limited to) bandsaws, chainsaws, or other cutting or pruning tools, without departing from the essence of the present invention.

The power tool **100** includes a main housing **102** accommodating a drive unit (not shown). The drive unit may include an electric motor or an internal combustion engine. The power tool **100** further includes a guide tube **104** extending outwardly from the main housing **102.** The guide tube **104** encloses a drive shaft and consequently functions as a drive shaft housing. The drive shaft is configured to transmit power from the drive unit to a working member **106** of the power tool **100.** As illustrated in the figure, the working member **106** is placed on a free end portion of the guide tube **104.** The working member **106** may include a guide bar arrangement having a guide bar and a cutting chain. The cutting chain extends around the guide bar and an end portion of the guide bar is connected to the drive shaft of the power tool **100.** The power tool **100** also includes a front handle **108** fixed to the guide tube **104** at an intermediate portion **110** thereof. Alternatively, the front handle **108** may be positioned at any other portion of the guide tube **104,** where the front handle **108** remains accessible to the user. The front handle **108** facilitates the rotational movement of the working member **106** of the power tool **100.**

In the exemplary embodiment illustrated in FIG. 1, the drive unit is accommodated in the main housing. However, it is apparent to a person ordinarily skilled in the art that the present invention may also be used in electrically powered hand tools, where the electric motor is placed in close vicinity to the working member and therefore no drive shaft is present in the guide tube.

As illustrated in FIG. 1, the power tool **100** further includes a handle arrangement **112.** The handle arrangement **112** includes a grip member **114** for user control of the power tool **100.** The handle arrangement **112** is rotatably arranged on the guide tube **104.** The rotatable arrangement configures the handle arrangement **112** for rotation in relation to the main housing **102** and the guide tube **104.** Specifically, the handle arrangement **112** is rotatably arranged on an external surface of a first end portion (not shown in FIG. 1) of the guide tube **104.**

In the embodiment illustrated in FIG. 1, the main housing **102,** the guide tube **104** and the working member **106** are in a central position, in which the cutting is performed in a generally horizontal direction. During operation of the power tool **100,** the user may desire to operate the power tool **100** in a position, which is different form the central position. For example, in the case of the power tool **100** illustrated in the embodiment of FIG. 1, which is a pole saw, the user may require to rotate the working member **106** of the power tool **100** by 90 degrees from the central position, for cutting off branches. Such rotation of the working member **106** also leads to the rotation of the guide tube **104** and the main housing **102** from the central position thereof. For this reason, the handle arrangement **112** is configured in such a way that the handle arrangement **112** is freely rotatable in relation to the main housing **102** and the guide tube **104** to a predefined angle, approximately 90 degrees, in both clockwise and counter-clockwise direction from the central position thereof. In an alternative embodiment the handle arrangement may be rotatable to an angle which is smaller or wider than 90 degrees.

As the handle arrangement is configured for free rotation (within a predetermined angle) in relation to the guide tube (and to the rest of the power tool), the operator can easily rotate the power tool during operation without releasing any locking means and thus without interrupting his/her work, and in the same time keep an ergonomic grip of the power tool.

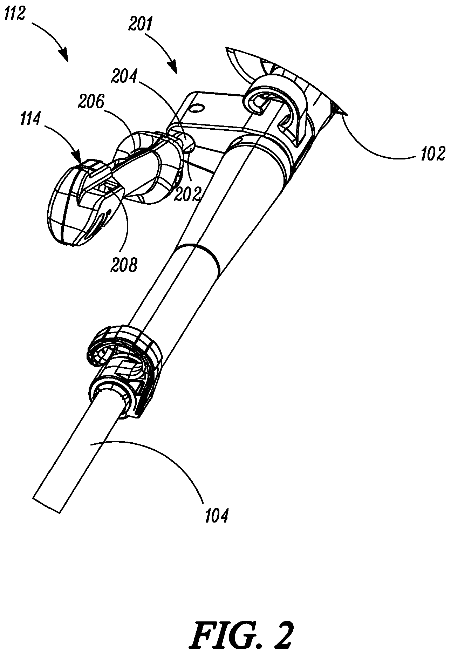

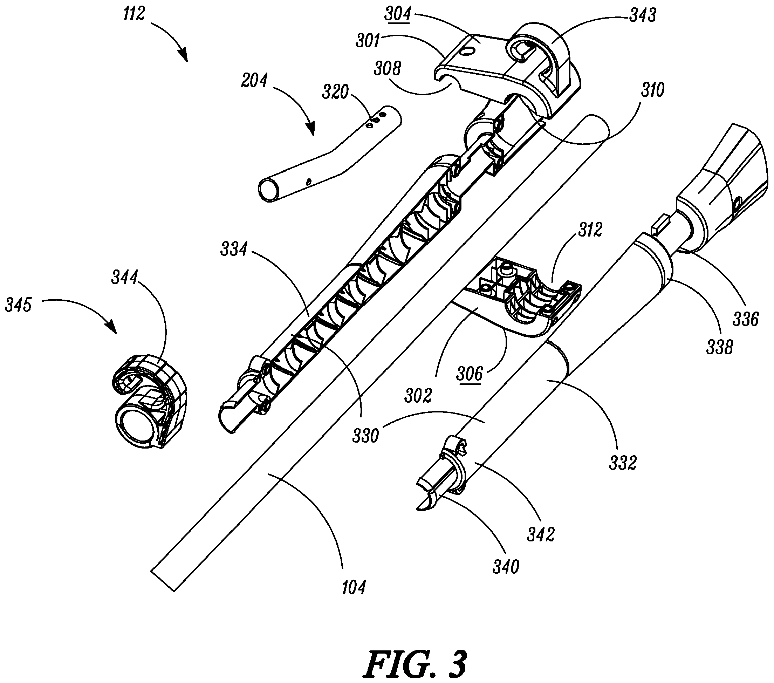

FIG. 2 illustrates a partial perspective view of the handle arrangement **112** of the power tool **100,** according to an embodiment of the invention. The handle arrangement **112** includes a supporting member **201.** The supporting member **201** includes a tubular member **116** and an aperture **202,** for securing the grip member **114.** The grip member **114** of the handle arrangement **112** includes an elongated connecting member **204** having a first end portion and a second end portion (illustrated in conjunction with FIG. 3) opposite to the first end portion. In the exemplary embodiment of FIG. 2, the elongated connecting member **204** is in the form of an elongated circular rod; however it is apparent to a person who is ordinarily skilled in the art that it may be of any other shape without deviating from the essence of the invention. The first end portion of the elongated connecting member **204** is received in the aperture **202** provided in the supporting member **201** of the handle arrangement **112.** Thus, the grip member **114** is located at a distance from the circumference of the guide tube **104.** Further, the elongated connecting member **204** is configured such that the longitudinal direction of the grip member **114** is positioned at an angle in relation to the axial direction of the guide tube **104.** This configuration gives the grip member an ergonomic position. Alternatively, the grip member **114** may be positioned in parallel relationship with the guide tube **104,** or the grip member **114** may enclose a portion of the guide tube **104.**

The grip member **114** further includes a gripping portion **206** disposed on the second end portion of the elongated connecting member **204.** Further, in the embodiment illustrated in the figures, the grip member **114** includes a throttle control **208** for user operation. The throttle control **208** may be in the form of one or more buttons disposed on the outer surface of the grip member **114.** Further, the throttle control **208** is electrically connected to the drive unit. Specifically, an electrical wire (not shown) connects the throttle control **208** to the drive unit, such that operation of the throttle control **208** regulates the drive unit for achieving variation in the speed of the power tool **100.**

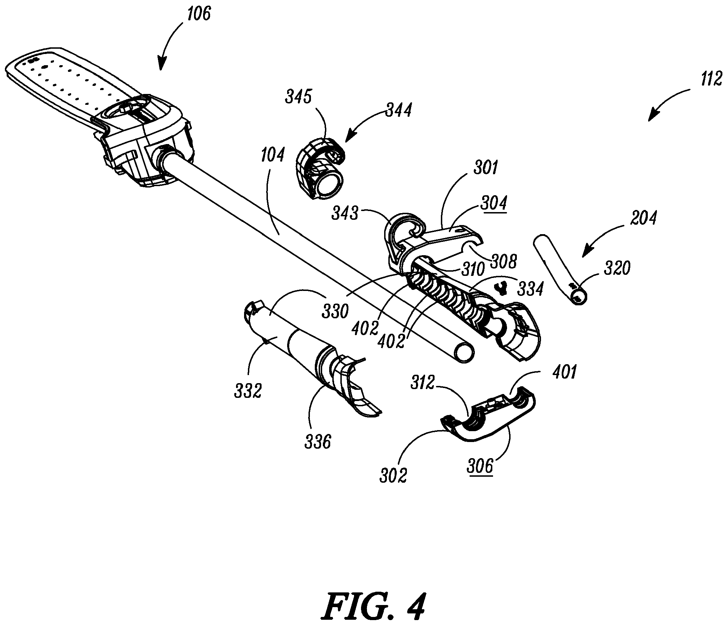

FIG. 3 and FIG. 4 illustrate a partial exploded view of the handle arrangement **112** of the power tool **100,** in accordance with an embodiment of the invention. As illustrated in the exploded view, the supporting member **201** includes a top half **301** and a bottom half **302.** Each of the top half **301** and the bottom half **302** include outer faces **304, 306** and inner faces having a first semicircular slot **308, 401** and a second semicircular slot **310, 312** respectively.

The top half **301** and the bottom half **302** of the supporting member **201** are configured such that the first semicircular slot **308** of the top half **301** aligns with the first semicircular slot **401** of the bottom half **302** to form the aperture **202** of circular configuration to secure the grip member **114** in position. Specifically, the aperture **202** substantially receives the first end portion **320** of the elongated connecting member **204** of the grip member **114.** Thus, the grip member **114** is located at a distance from the circumference of the guide tube **104.** In another embodiment of the present invention, the aperture **202** may be of other configuration such as, but not limited to, rectangular or square configuration capable of receiving the first end portion **320** of the elongated connecting member **204.** In such embodiment, the elongated connecting member **204** and the slots defined in the top half **301** and bottom half **302** of the supporting member **201** may also be of a corresponding other configuration such as (but not limited to) rectangular or square configuration.

Similarly, the top half **301** and the bottom half **302** of the supporting member **201** are configured such that the second semicircular slot **310** of the top half **301** aligns with the second semicircular slot **312** of the bottom half **302** to form a generally tubular member **116.** In one embodiment, the tubular member **116** encircles a portion of the circumference of the guide tube **104.** The tubular member **116** is supported on the guide tube **104** in such a way that the supporting member **201** is freely rotatable in relation to the main housing **102** and to the guide tube **104** to an angle of approximately 90 degrees both clockwise and counter-clock wise from a central position. In an alternative embodiment the handle arrangement may be rotatable to an angle which is smaller or wider than 90 degrees.

In the embodiment illustrated in the figures, the handle arrangement **112** is supported on a protection member **330.** The protection member **330** is configured to encircle a portion of the guide tube **104.** During utilization of the power tool **100,** the power tool **100** is positioned in such a manner that the guide tube **104** remains proximate to the body of the user. However, the protection member **330** precludes the guide tube **104** from contacting the user and thus prevents excessive wear on the body and the clothes of the user.

The protection member **330** includes a first hollow semi-cylindrical portion **332** and a second hollow semi-cylindrical portion **334.** Upon joining the first hollow semi-cylindrical portion **332** and the second hollow semi-cylindrical portion **334,** the protection member **330** gets fixedly supported with the guide tube **104.**

The protection member **330** includes an elongated channel defined by a plurality of ribs **402** in each of the first hollow semi-cylindrical portion **332** and the second hollow semi-cylindrical portion 334 of the protection member **330.** The portion of the guide tube **104** is received within the elongated channel of the protection member 330 and thus, the protection member **330** encircles the portion of the guide tube 104. Further, the protection member **330** includes a receiving portion **336** at a first end **338** of the protection member **330** for receiving the supporting member **201.** The tubular portion of the supporting member **201** is configured to encircle the receiving portion **336** of the protection member **330.** The receiving portion **336** and the supporting member **201** are arranged such that the handle arrangement **112** is freely rotatable in relation to the main housing **102** and the guide tube **104** to an angle of approximately 90 degrees both clockwise and counter clockwise from the central position. In an alternative embodiment the handle arrangement may be rotatable to an angle which is smaller or wider than 90 degrees. Specifically, the supporting member **201** is rotatable with respect to the receiving portion **336** of the protection member **330.** Thus, the grip member **114** remains in the same position, even if the guide tube **104** and the main housing **102** are in a position other than the central position illustrated in the FIG. 1.

In an alternative embodiment, where the tubular member **116** is placed directly on the guide tube **104,** one or more stoppers may be placed on either side of it to prevent the supporting member **201** from being displaced in an axial direction of the guide tube **104.**

As illustrated in FIG. 3 and FIG. 4, the handle arrangement **112** also includes a means for suspension of the power tool **100** in a harness. The means for suspension may include hooks, clips, hinges and the like. The suspension of the power tool **100** on the body of the user substantially reduces the strain on the hands and arms of the user.

As illustrated in the embodiment of FIG. 3 and FIG. 4, the supporting member **201** includes at least one hook **343.** Another hook **344** is provided on a substantially cylindrical member **345** having a tubular portion defined on the inner surface. In the embodiment illustrated in FIG. 3, both the supporting member **201** and the cylindrical member **345** are supported on the protection member **330** (explained in conjunction with FIG. 3). The tubular portion of the cylindrical member **345** encircles a receiving portion **340** provided at the second end **342** of the protection member **330.** Alternatively, the tubular portion of the cylindrical member **345** is placed directly on the guide tube **104** and stoppers are placed at both ends of the cylindrical member **345.** The tubular portion of the cylindrical member **345** is configured such that the cylindrical member **345** is freely rotatable in relation to the guide tube **104** and the main housing **102.** Further, since the harness is attached to the hooks **343, 344** carried by the supporting member **201** and the cylindrical member **345,** the harness will remain stationary even if the guide tube **104** and the main housing **102** rotates between different rotational positions.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A handle arrangement **(112)** for a power driven hand tool **(100),** the power driven hand tool **(100)** comprising:
a main housing **(102)** arranged at a first end of a guide tube **(104),** and
a working member **(106)** arranged at a second end of the guide tube **(104),** and the handle arrangement **(112)** comprising a grip member **(114)** for user control of the power driven hand tool **(100),**
wherein the handle arrangement **(112)** is rotatably arranged on the guide tube **(104)** for rotation in relation to the main housing **(102)** and to the guide tube **(104),**
**characterized in that**
the handle arrangement (112) comprises a means for suspension (343, 344) of the power tool **(100)** in a harness.

2. A handle arrangement **(112)** according to claim 1, wherein the handle arrangement **(112)** is freely rotatable in relation to the main housing **(102)** and to the guide tube **(104)** to a predefined angle both clockwise and counter-clockwise from a central position.

3. A handle arrangement **(112)** according to claim 2, wherein the handle arrangement **(112)** is freely rotatable in relation to the main housing **(102)** and to the guide tube **(104)** to an angle of at least 90 degrees both clockwise and counter-clockwise from the central position.

4. A handle arrangement **(112)** according to any of claims 1-3, wherein the grip member **(114)** is provided with a throttle control for user operation.

5. A handle arrangement **(112)** according to any of the preceding claims, wherein the grip member **(114)** is located at a distance from the circumference of the guide tube **(104).**

6. A handle arrangement **(112)** according to claim 5, wherein the grip member **(114)** is arranged in such a way that it may be positioned at an angle in relation to the guide tube **(104).**

7. A handle arrangement **(112)** according to any of claims 5-6, wherein the handle arrangement **(112)** comprises a supporting member **(201),** the supporting member **(201)** comprising an aperture **(202)** for securing of the grip member **(114).**

8. A handle arrangement **(112)** according to any of the preceding claims, wherein the means for suspension of the power driven hand tool **(100)** comprise at least one hook **(343).**

9. A handle arrangement **(112)** according to any of the preceding claims, wherein the handle arrangement **(112)** comprises a generally tubular member **116** arranged to encircle a portion of the guide tube **(104).**

10. A handle arrangement **(112)** according to any of the preceding claims, wherein the handle arrangement **(112)** is supported on a protection member **(330)** fixedly supported on the guide tube **(104)** in such a way that the handle arrangement (112) is freely rotatable in relation to the main housing (102) and to the guide tube (104).

11. A power driven hand tool **(100)** comprising a handle arrangement **(112)** according to any of the preceding claims.

## Patentansprüche

1. Griffanordnung (112) für ein kraftbetriebenes Handwerkzeug (100), wobei das kraftbetriebene Handwerkzeug (100) Folgendes umfasst:
ein Hauptgehäuse (102), das an einem ersten Ende eines Führungsrohrs (104) angeordnet ist, und
ein Arbeitsglied (106), das an einem zweiten Ende des Führungsrohrs (104) angeordnet ist,
und wobei die Griffanordnung (112) ein Handgriffglied (114) zur Steuerung des kraftbetriebenen Handwerkzeugs (100) durch den Benutzer umfasst,
wobei die Griffanordnung (112) an dem Führungsrohr (104) zur Drehung bezüglich des Hauptgehäuses (102) und des Führungsrohrs (104) drehbar angeordnet ist,
**dadurch gekennzeichnet, dass**
die Griffanordnung (112) ein Mittel (343, 344) zum Aufhängen des kraftbetriebenen Werkzeugs (100) in einem Tragegurt umfasst.

2. Griffanordnung (112) nach Anspruch 1, wobei die Griffanordnung (112) bezüglich des Hauptgehäuses (102) und des Führungsrohrs (104) in einen vordefinierten Winkel sowohl im Uhrzeigersinn als auch entgegen dem Uhrzeigersinn aus einer mittleren Position ungehindert drehbar ist.

3. Griffanordnung (112) nach Anspruch 2, wobei die Griffanordnung (112) bezüglich des Hauptgehäuses (102) und des Führungsrohrs (104) in einen Winkel von mindestens 90 Grad sowohl im Uhrzeigersinn als auch entgegen dem Uhrzeigersinn aus einer mittleren Position ungehindert drehbar ist.

4. Griffanordnung (112) nach einem der Ansprüche 1-3, wobei das Handgriffglied (114) mit einer Drosselungssteuerung zum Betrieb durch den Benutzer versehen ist.

5. Griffanordnung (112) nach einem der vorhergehenden Ansprüche, wobei das Handgriffglied (114) in einem Abstand zum Umfang des Führungsrohrs (104) positioniert ist.

6. Griffanordnung (112) nach Anspruch 5, wobei das Handgriffglied (114) derart angeordnet ist, dass es in einem Winkel zum Führungsrohr (104) positioniert werden kann.

7. Griffanordnung (112) nach einem der Ansprüche 5-6, wobei die Griffanordnung (112) ein Stützglied (201) umfasst, wobei das Stützglied (201) eine Öffnung (202) zum Sichern des Handgriffglieds (114) umfasst.

8. Griffanordnung (112) nach einem der vorhergehenden Ansprüche, wobei das Mittel zum Aufhängen des kraftbetriebenen Handwerkzeugs (100) mindestens einen Haken (343) umfasst.

9. Griffanordnung (112) nach einem der vorhergehenden Ansprüche, wobei die Griffanordnung (112) ein allgemein rohrförmiges Glied (116) umfasst, das dahingehend angeordnet ist, einen Abschnitt des Führungsrohrs (104) zu umgeben.

10. Griffanordnung (112) nach einem der vorhergehenden Ansprüche, wobei die Griffanordnung (112) auf einem Schutzglied (330) gestützt wird, das derart auf dem Führungsrohr (104) fest gestützt wird, dass die Griffanordnung (112) bezüglich des Hauptgehäuses (102) und des Führungsrohrs (104) ungehindert drehbar ist.

11. Kraftbetriebenes Handwerkzeug (100), das eine Griffanordnung (112) nach einem der vorhergehenden Ansprüche umfasst.

## Revendications

1. Système de poignée (112) pour un outil à main électrique (100), l'outil à main électrique (100) comprenant :
un boîtier principal (102) disposé à une première extrémité d'un tube de guidage (104), et
un élément de travail (106) disposé à une seconde extrémité du tube de guidage (104),
et le système de poignée (112) comprenant un élément de préhension (114) permettant à l'utilisateur de commander l'outil à main électrique (100),
le système de poignée (112) étant disposé à rotation sur le tube de guidage (104) à des fins de rotation par rapport au boîtier principal (102) et au tube de guidage (104),
**caractérisé en ce que**
le système de poignée (112) comprend un moyen de suspension (343, 344) de l'outil électrique (100) dans un harnais.

2. Système de poignée (112) selon la revendication 1, le système de poignée (112) pouvant tourner librement par rapport au boîtier principal (102) et au tube de guidage (104) jusqu'à un angle prédéfini à la fois dans le sens horaire et le sens antihoraire à partir d'une position centrale.

3. Système de poignée (112) selon la revendication 2, le système de poignée (112) pouvant tourner librement par rapport au boîtier principal (102) et au tube de guidage (104) jusqu'à un angle d'au moins 90 degrés à la fois dans le sens horaire et le sens antihoraire à partir d'une position centrale.

4. Système de poignée (112) selon l'une quelconque des revendications 1 à 3, dans lequel l'élément de préhension (114) est pourvu d'un dispositif de commande de puissance destiné à être manipulé par l'utilisateur.

5. Système de poignée (112) selon l'une quelconque des revendications précédentes, dans lequel l'élément de préhension (114) est situé à une certaine distance de la circonférence du tube de guidage (104).

6. Système de poignée (112) selon la revendication 5, dans lequel l'élément de préhension (114) est disposé de telle sorte qu'il puisse être positionné à un certain angle par rapport au tube de guidage (104).

7. Système de poignée (112) selon l'une quelconque des revendications 5 et 6, le système de poignée (112) comprenant un élément de support (201), l'élément de support (201) comprenant une ouverture (202) pour la fixation de l'élément de préhension (114).

8. Système de poignée (112) selon l'une quelconque des revendications précédentes, dans lequel le moyen de suspension de l'outil à main électrique (100) comprend au moins un crochet (343).

9. Système de poignée (112) selon l'une quelconque des revendications précédentes, le système de poignée (112) comprenant un élément globalement tubulaire (116) disposé de façon à entourer une partie du tube de guidage (104).

10. Système de poignée (112) selon l'une quelconque des revendications précédentes, le système de poignée (112) étant supporté sur un élément de protection (330) supporté de manière fixe sur le tube de guidage (104) de telle sorte que le système de poignée (112) puisse tourner librement par rapport au boîtier principal (102) et au tube de guidage (104).

11. Outil à main électrique (100) comprenant un système de poignée (112) selon l'une quelconque des revendications précédentes.
